# EUROPÄISCHE PATENTSCHRIFT

(11) **EP 1 042 104 B1**
(45) Veröffentlichungstag und Bekanntmachung des Hinweises auf die Patenterteilung: **05.12.2001**
(21) Anmeldenummer: 98965077.5
(22) Anmeldetag: 17.11.1998
(51) Int. Cl.: B23Q 11/08

(54) **GLIEDERSCHÜRZE**
LINK APRON
TABLIER A ELEMENTS ARTICULES

(30) Priorität: 23.12.1997 DE 19757729
(43) Veröffentlichungstag der Anmeldung: 11.10.2000
(73) Patentinhaber: Eitec Führungsbahnschutz-Systeme GmbH, 85386 Eching (DE)
(72) Erfinder: EISNER, Karl, Heinz, D-85375 Neufahrn (DE)
(74) Vertreter: Winter, Brandl, Fürniss, Hübner, Röss, Kaiser, Polte, Partnerschaft
(86) Internationale Anmeldenummer: DE9803395
(87) Internationale Veröffentlichungsnummer: WO9933608

(56) Entgegenhaltungen:
- DE-A- 4 033 541
- DE-A- 4 426 483
- US-A- 2 850 332
- US-A- 3 114 222

## Beschreibung

Die vorliegende Erfindung betrifft eine Gliederschürze und insbesondere eine Gliederschürze, die als bewegbare Schutzabdeckung von Maschinen verwendet wird, wie z.B. aus DE-A-40 33 541 bekannt.

Im Stand der Technik sind verschiedene Arten von bewegbaren Abdeckungen für Maschinen bekannt. Diese Abdeckungen werden verwendet, um die Maschine zum Beispiel gegen bei einer Verarbeitung entstehende Späne und gegen für die Verarbeitung erforderliches Kühlmittel zu schützen, um die Lebensdauer der Maschine zu erhöhen, eine Beschädigung empfindlicher Teile der Maschine zu verhindern, eine Zuverlässigkeit der Maschine sicherzustellen, eine übermäßige Verschmutzung der Maschine zu vermeiden, usw..

Eine Art einer bewegbaren Schutzabdeckung einer Maschine ist eine Teleskopabdeckung. Diese Teleskopabdeckung kann in unterschiedlichen Bauformen für verschiedene Zwecke verwendet werden.

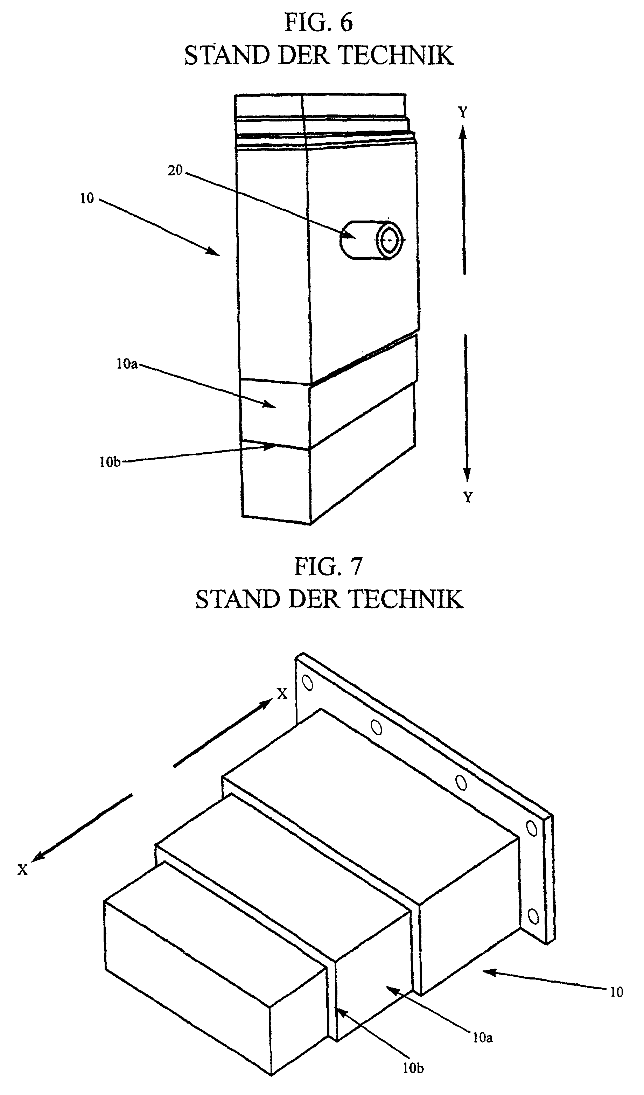

Zum Beispiel kann eine Teleskopabdeckung 10 in der in Fig. 6 gezeigten Ausgestaltung als Spindelabdeckung einer in Richtung der Pfeile Y in Fig. 6 bewegbaren Spindel 20 verwendet werden oder kann sie in der in Fig. 7 gezeigten Ausgestaltung als Maschinenbettabdeckung verwendet werden, die in Richtung der Pfeile X in Fig. 7 bewegbar ist.

Eine derartige Teleskopabdeckung 10 weist jedoch verschiedene Nachteile auf. Zum einen besteht die Teleskopabdeckung 10 im allgemeinen aus Stahl, so daß sie bei Verwendung bei großen Maschinen, die eine große Schutzabdeckung erfordern, ein sehr hohes Gewicht aufweist, das einen erhöhten Kraftaufwand an dem Bewegungsmechanismus zum Beispiel der Spindel 20 ergibt. (Üblicherweise werden Teleskopabdeckungen aufgrund ihres Gewichts ebenso lediglich bei geringen Verfahrgeschwindigkeiten verwendet.) Dieser zusätzliche Kraftaufwand muß bei der Auslegung des Bewegungsmechanismus der Spindel 20 berücksichtigt werden, um zusätzliche Fehlerquellen zu beseitigen, und führt zu einer übermäßigen Energieaufnahme des Bewegungsmechanismus der Spindel 20, wodurch die Betriebskosten der Maschine erhöht werden. Um den Kraftaufwand zu verringern, werden die Teleskopabdeckungen 10 im allgemeinen von Gleitern oder Rollen (nicht gezeigt) geführt bzw. gehalten.

Weiterhin ist es zur Vermeidung eines Eindringens von Spänen oder dergleichen zwischen die einzelnen Elemente 10a der Teleskopabdeckung 10 erforderlich, an einem Ende 10b der Elemente 10a einen Abstreifer (nicht gezeigt) vorzusehen, der ein derartiges Eindringen von Spänen oder dergleichen verhindert. Außerdem ist es schwierig, diese Teleskopabdeckungen 10 in Fällen zu verwenden, in denen es erforderlich ist, zum Beispiel eine Spindel 20 nicht nur in eine sondern in zwei Richtungen zu bewegen. Schließlich ist der Fertigungsaufwand aufgrund der vielen unterschiedlichen Bauteile, zum Beispiel der unterschiedlich großen einzelnen Elemente 10a der Teleskopabdeckung 10, der Gleiter oder Rollen, usw., verhältnismäßig hoch und wird dadurch die Teleskopabdeckung 10 insgesamt teuer.

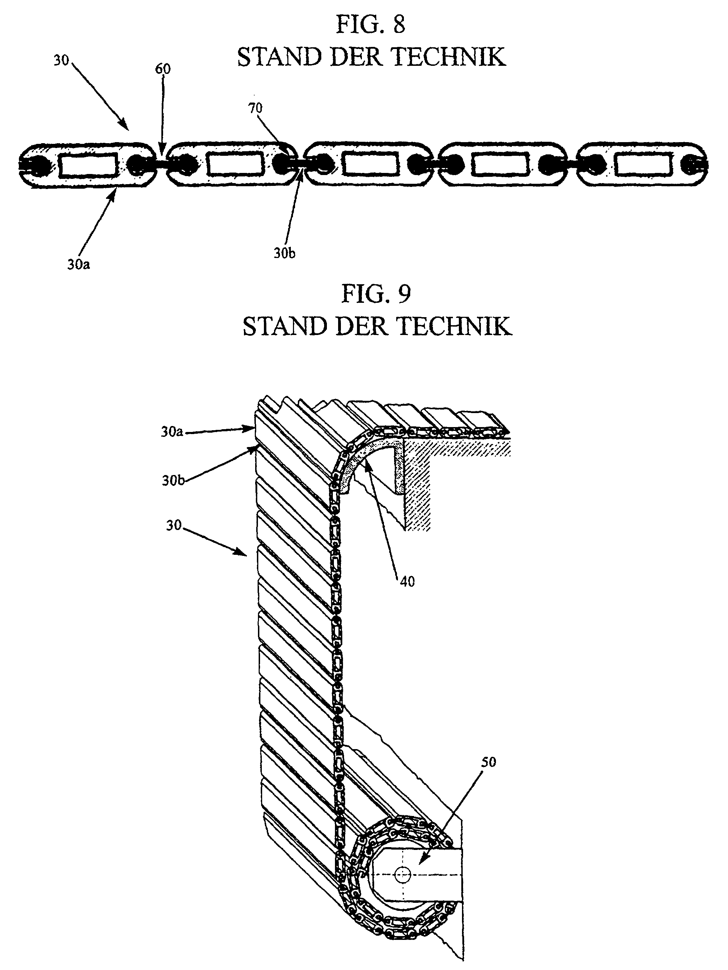

Eine weitere Möglichkeit einer Schutzabdeckung einer Maschine ist in den Figuren 8 und 9 gezeigt. Bei dieser Ausgestaltung handelt es sich um eine sogenannte Gliederschürze 30. Diese Gliederschürze 30 besteht aus lediglich zwei unterschiedlichen einzelnen Elementen, einem Glied 30a und einem Gliederverbinder 30b. Diese Gliederschürze 30 weist gegenüber der zuvor erwähnten Teleskopabdeckung 10 verschiedene Vorteile auf. Zum Beispiel weist die Gliederschürze 30, deren Glieder 30a vorzugsweise aus Aluminium und deren Gliederverbinder 30b vorzugsweise aus Polyurethan bestehen, gegenüber der Teleskopabdeckung 10 ein geringeres Gewicht auf. Weiterhin besteht bei der Gliederschürze 30 die Möglichkeit, diese einfach mittels einer Umlenkvorrichtung 40 umzulenken (siehe Fig. 9). Außerdem kann die Gliederschürze 30 ebenso einfach mittels einer Aufwickelvorrichtung 50 aufgewickelt werden. Demgemäß besteht bei der Gliederschürze 30 sehr einfach die Möglichkeit, diese an die jeweils erforderlichen Bedingungen bezüglich einer Schutzabdeckung für eine bestimmte Maschine anzupassen, wobei es mit der Gliederschürze 30 auch sehr einfach möglich ist, eine Schutzabdeckung einer Maschine vorzusehen, die für zwei unterschiedliche Bewegungsrichtungen zum Beispiel einer Spindel der Maschine zweckmäßig ist. Ebenso lassen Gliederschürzen 30 aufgrund ihres verhältnismäßig geringen Gewichts hohe Verfahrgeschwindigkeiten von bis zu 100 m/min zu.

Jedoch weist die Gliederschürze 30, wie sie in den Figuren 8 und 9 gezeigt ist, folgende Nachteile auf.

Aufgrund eines Zwischenbereichs 60 (siehe Fig. 8) zwischen jeweiligen angrenzenden Gliedern 30a besteht die Möglichkeit, daß sich Späne oder dergleichen auf Oberflächen der die Glieder 30a verbindenden Gliederverbinder 30b ansammeln. Insbesondere besteht demgemäß die Möglichkeit, daß Späne oder dergleichen in einen Verbindungsbereich 70 eines Glieds 30a und eines Gliederverbinders 30b gelangen und sich darin verspießen bzw. verklemmen. Dadurch wird aufgrund der Späne oder dergleichen die Lebensdauer der Gliederschürze 30 beeinträchtigt, da zum Beispiel der Gliederverbinder 30b durch die Späne oder dergleichen beschädigt werden kann. Außerdem besteht die Möglichkeit, daß Späne bei einer derartigen Ausrichtung der Gliederschürze 30, daß die Glieder 30a und die Gliederverbinder 30b in der vertikalen Richtung verlaufen und die Bewegungsrichtung der Gliederschürze 30 in der horizontalen Richtung verläuft, in eine an der Unterseite in Laufrichtung der Gliederschürze 30 angebrachte Führung (nicht gezeigt) gelangen und sich dort ebenso verspießen oder verklemmen, was dazu führt, daß ruckartige Bewegungen der Gliederschürze 30 auftreten können oder schlimmstenfalls die Bewegung der Gliederschürze 30 vollständig gehemmt wird.

Die Aufgabe der vorliegenden Erfindung besteht demgemäß darin, die zuvor erwähnten Probleme im Stand der Technik zu lösen, sowie eine Gliederschürze zu schaffen, die im Betrieb eine zuverlässige Bewegungsfähigkeit mit geringem Widerstand dauerhaft aufrechterhält.

Diese Aufgabe wird erfindungsgemäß mittels einer Gliederschürze nach Anspruch 1 gelöst.

Weitere vorteilhafte Ausgestaltungen der vorliegenden Erfindung sind Gegenstand der Unteransprüche.

Erfindungsgemäß wird eine Gliederschürze geschaffen, bei der jeweils zwei Glieder einer Mehrzahl von Gliedern gelenkig miteinander verbunden sind. Weiterhin sind zueinander geradlinig ausgerichtete Glieder derart angeordnet, daß Teile ihrer Seitenflächen aneinanderstoßen. Demgemäß weist die erfindungsgemäße Gliederschürze den Vorteil auf, daß aufgrund der aneinander anstoßenden bzw. unmittelbar aneinander angrenzenden Teile der Seitenflächen ein Ansammeln von Spänen in einem Zwischenbereich zwischen angrenzenden Gliedern verhindert werden kann, da kein derartiger Zwischenbereich vorhanden ist. Somit besteht bei dieser Gliederkette weiterhin nicht die Möglichkeit, daß sich Späne oder dergleichen in einem Bereich zwischen Gliedern der Gliederschürze verspießen oder verklemmen und eine Beschädigung der Gliederschürze verursachen.

Die Gestalt der Gliederschürze ist erfindungsgemäß derart ausgeführt, daß die Gliederschürze mit einem vorbestimmmten Radius umlenkbar ist wobei von den Großflächen entfernte Abschnitte der Seitenflächen mit Umlenkradien versehen sind, entlang welcher benachbarte Glieder bei einer Relativverschwenkung aufeinander abrollbar sind, so daß die Gliederschürze sehr einfach an unterschiedliche Anwendungen angepaßt werden kann.

Die Seitenflächen können mit an Großflächen, die als Abdeckungsflächenabschnitt dienen, angrenzenden Abschnitten derart aneinander anliegen, daß die einzelnen Großflächen der Glieder in der Streckstellung bündig sind.

Vorzugsweise bilden die einzelnen Glieder der Gliederschürze in der Streckstellung eine glatte Gesamtoberfläche aus. Somit kann verhindert werden, daß Späne bei derartiger vertikaler Lagerung, daß die Glieder in vertikaler Richtung verlaufen und die Bewegungsrichtung der Gliederschürze in horizontaler Richtung verläuft, in eine unten in Bewegungsrichtung der Gliederschürze angebrachte Führung fallen, da sich keine Spalte zwischen der Gliederschürze und der Führung befinden, womit ein Verspießen oder Verklemmen von Spänen in der Führung verhindert werden kann.

Weiterhin kann die Gliederschürze eine Abstreifvorrichtung aufweisen, die ein feststehender Abstreifer oder eine Bürste sein kann, um auf der Gliederschürze vorhandene Stoffe, wie zum Beispiel Späne, abzustreifen, um somit eine noch höhere Zuverlässigkeit im Betrieb der Gliederschürze sicherzustellen.

Die Gliederschürze kann weiterhin derart ausgestaltet sein, daß sie auf eine Aufwickelvorrichtung aufwickelbar ist, womit ebenso eine einfache Anpaßbarkeit an unterschiedliche Anwendungen möglich ist, wobei die Aufwickelvorrichtung in einer Abdeckung untergebracht sein kann.

Die Abstreifvorrichtung kann vorzugseise derart angebracht sein, daß Späne vor einem Eintritt in die Abstreifvorrichtung entfernt werden, wobei die Abstreifvorrichtung sowohl an der Abdeckung als auch von der Abdeckung entfernt vorgesehen sein kann, wodurch verhindert werden kann, daß auf der Gliederschürze vorhandene Stoffe in die Abdeckung gelangen.

Um die unmittelbar aneinander angrenzenden Teile der Seitenflächen der Glieder sowie die glatte Gesamtoberfläche auszubilden, können die einzelnen Oberflächen der Glieder eben und die unmittelbar aneinander angrenzenden Teile der Seitenflächen der Glieder senkrecht zu der ebenen Oberfläche ausgestaltet sein.

Zur Gewichtsersparnis können die einzelnen Glieder weiterhin einen Hohlraum aufweisen.

Weiterhin kann sich zwischen jeweils zwei angrenzenden Gliedern der Gliederschürze ein Gliederverbinder befinden, der diese Glieder miteinander befindet

Schließlich können die Gliederverbinder zur zuverlässigen Verbindung der einzelnen Glieder einen Mittenabschnitt mit zueinander parallelen Oberflächen und Unterflächen und zwei Endabschnitte aufweisen, die eine im Querschnitt betrachtete kreisförmige Gestalt aufweisen und können die Glieder eine Aussparung aufweisen, die einem Endabschnitt und einem Teil des Mittenabschnitts des Gliederverbinders entspricht.

Die vorliegende Erfindung wird nachstehend anhand der Beschreibung von Ausführungsbeispielen unter Bezugnahme auf die beiliegende Zeichnung näher erläutert.

Es zeigt:
- **Fig. 1**: eine Querschnittsansicht einer Gliederschürze gemäß einem ersten Ausführungsbeispiel der vorliegenden Erfindung;
- **Fig. 2**: eine Querschnittsansicht einer Gliederschürze gemäß einem zweiten Ausführungsbeispiel der vorliegenden Erfindung;
- **Fig. 3**: eine Querschnittsansicht eines einzelnen Glieds einer Gliederschürze gemäß dem ersten oder zweiten Ausführungsbeispiel der vorliegenden Erfindung;
- **Fig. 4**: eine perspektivische Ansicht einer Schutzabdeckung einer Maschine mittels Gliederschürzen gemäß einem dritten Ausführungsbeispiel der vorliegenden Erfindung;
- **Fig. 5**: eine perspektivische Ansicht einer Schutzabdeckung einer Maschine mittels Gliederschürzen gemäß einem vierten Ausführungsbeispiel der vorliegenden Erfindung;
- **Fig. 6**: eine als Spindelabdeckung verwendete Teleskopabdeckung im Stand der Technik;
- **Fig. 7**: eine als Maschinenbettabdeckung verwendete Teleskopabdeckung im Stand der Techink;
- **Fig. 8**: eine Querschnittsansicht einer Gliederschürze im Stand der Technik; und
- **Fig. 9**: ein Beispiel eines Umlenkens und Aufwickelns der Gliederschürze im Stand der Technik.

Es folgt die Beschreibung von Ausführungsbeispielen der vorliegenden Erfindung.

Nachstehend erfolgt die Beschreibung eines ersten Ausführungsbeispiels der vorliegenden Erfindung.

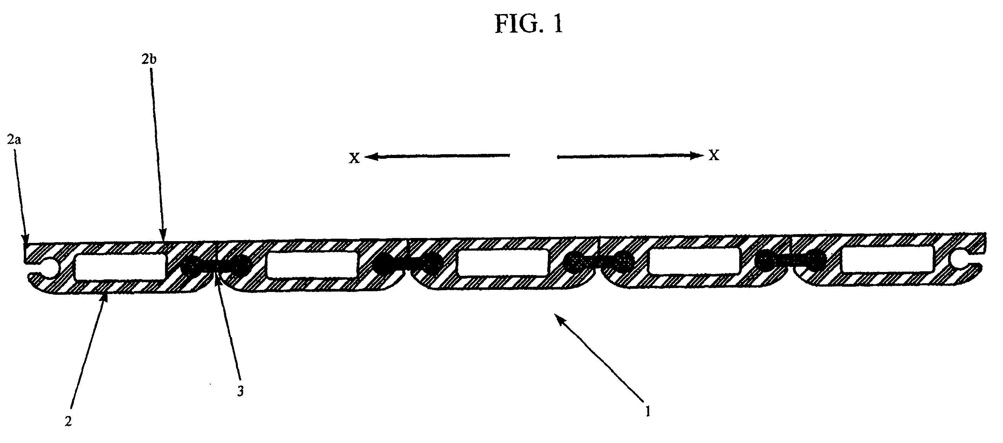

Es wird auf Fig. 1 verwiesen. Eine Gliederschürze 1 gemäß dem ersten Ausführungsbeispiel der vorliegenden Erfindung besteht aus einer Mehrzahl von Gliedern 2 und einer Mehrzahl von Gliederverbindern 3. Die Glieder 2 können zum Beispiel aus Aluminium oder einer Aluminiumlegierung bestehen und die Gliederverbinder 3 können zum Beispiel aus Polyurethan bestehen, welches beständig gegen Kühlmittel ist, das bei einer von einer die Gliederschürze als Schutzabdeckung verwendenden Maschine durchgeführten Verarbeitung erforderlich ist. Bei einer Verarbeitung von Magnesium bestehen die Glieder 2 vorzugsweise aus Nirostastahl. Die angrenzenden Glieder 2 der Gliederschürze 1 sind über einen der Gliederverbinder 3 miteinander verbunden. Wenn die einzelnen Glieder 2 geradlinig entlang der Richtung der Pfeile X in Fig. 1 ausgerichtet sind, daß heißt, wenn sie sich in einem gestreckten Zustand befinden, in dem sie entlang einer geraden Linie aufgereiht sind, grenzen Teile 2a von Seitenflächen zweier angrenzender Glieder 2 unmittelbar aneinander an, so daß es keinen Zwischenbereich zwischen den einzelnen Gliedern 2 gibt, in dem der Gliederverbinder 3 bezüglich einer Schutzoberfläche (der oberen Oberfläche in Fig. 1) der Gliederschürze 1 freigelegt ist. Weiterhin bilden die einzelnen Oberflächen 2b der einzelnen Glieder 1 in dem zuvor erwähnten gestreckten Zustand vorzugsweise eine glatte Gesamtoberfläche aus, so daß der folgende weitere Vorteil erzielt werden kann. Wenn die Glieder 2 und die Gliederverbinder 3 der Gliederschürze 1 vertikal angeordnet sind und die Bewegungsrichtung der Gliederschürze 1 horizontal verläuft, daß heißt, wenn Fig. 1 eine Draufsicht auf die Gliederschürze 1 darstellt, kann verhindert werden, daß auf der Gliederschürze 1 angesammelte Späne oder dergleichen von der Gliederschürze 1 rutschen und in eine an der Unterseite der Gliederschürze 1 in der Bewegungsrichtung der Gliederschürze 1 angebrachte Führung (nicht gezeigt) fallen, da es keine Spalte zwischen der glatten Schutzoberfläche der Gliederschürze 1 und der Führung gibt.

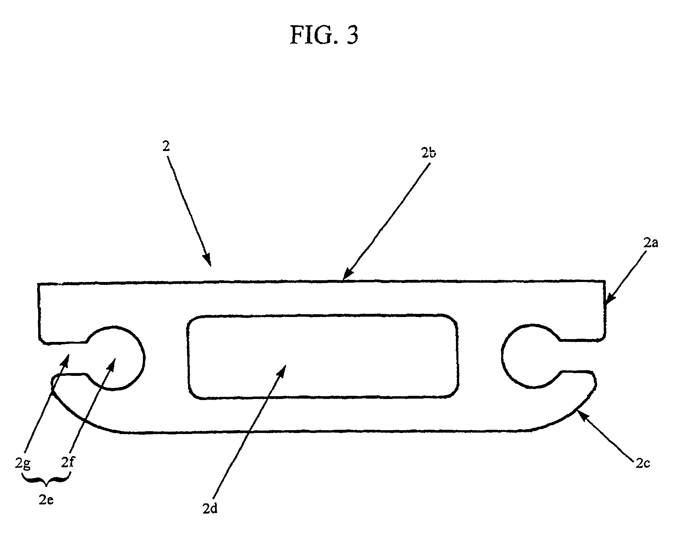

Der genaue Aufbau eines einzelnen in diesem Ausführungsbeispiel vorzugsweise verwendeten Glieds 2 ist in Fig. 3 gezeigt. Wie es zu sehen ist, weist dieses Glied 2 die glatte Oberfläche 2b auf. Der Teil 2a einer Seitenfläche des Glieds 2, der im gestreckten Zustand an einen entsprechenden Teil 2a einer Seitenfläche eines angrenzenden Glieds 2 anstößt, ist derart ausgestaltet, daß er mit der Oberfläche 2b des Glieds 2 einen rechten Winkel ausbildet. Die anderen Teile 2c der Seitenfläche des Glieds 2 weisen eine gekrümmte Form bzw. einen Umlenkradius auf, so daß die Gliederschürze 1 (siehe Fig. 1), die aus derartigen Gliedern 2 besteht, mit einem vorbestimmten Radius umgelenkt werden kann, bei dem die benachbarten Glieder über die gekrümmte Form abrollbar sind. Zur Gewichtsersparnis kann jedes Glied 2 einen Hohlraum 2d aufweisen, wobei auch mit diesem Hohlraum 2d eine ausreichende mechanische Festigkeit des Glieds 2 aufrechterhalten wird.

Weiterhin weist das Glied 2 an jeder Seitenfläche eine Aussparung 2e auf. Diese Aussparung 2e entspricht in der Gestalt einem Teil, vorzugsweise im wesentlichen einer Hälfte, des Gliederverbinders 3 (siehe Fig. 1), der bei der Gliederschürze 1 verwendet wird. In dem ersten Ausführungsbeispiel in Fig. 1 wird ein derartiger Gliederverbinder 3 verwendet, der in dem in Fig. 1 gezeigten Querschnitt einen Mittenabschnitt mit parallelen Oberflächen und Unterflächen und an jedem Ende des Mittenabschnitts jeweils einen Endabschnitt in kreisförmiger Gestalt aufweist. Demgemäß weist die Aussparung 2e bei dem Glied 2 in Fig. 3 eine im Querschnitt kreisförmige Aussparung 2f und eine Aussparung 2g mit zueinander parallelen Ober- und Unterflächen auf, die in der Lage sind, einen der zwei Endabschnitte und einen Teil des Mittenabschnitts des Gliederverbinders 3 derart aufzunehmen, daß die in Fig. 1 gezeigte Gliederschürze 1 ausgebildet wird. Daß heißt, jede Aussparung 2e nimmt im wesentlichen eine Hälfte des Gliederverbinders 3 auf, so daß kein Zwischenbereich zwischen einzelnen Gliedern 2 der Gliederschürze 1 vorhanden ist.

Nachstehend erfolgt die Beschreibung eines zweiten Ausführungsbeispiels der vorliegenden Erfindung.

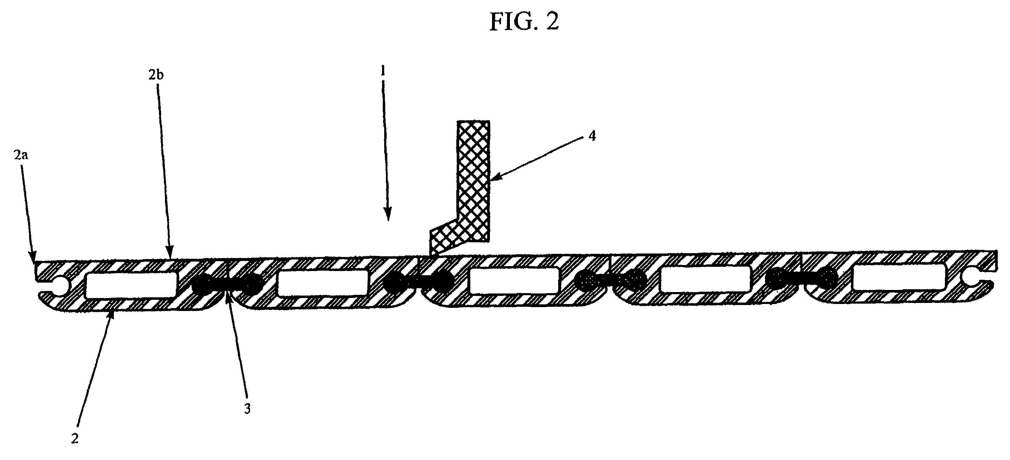

Es wird auf Fig. 2 verwiesen. Das zweite Ausführungsbeispiel der vorliegenden Erfindung ist ausgenommen dessen zum dem zuvor erwähnten ersten Ausführungsbeispiel der vorliegenden Erfindung, wie es unter Bezugnahme auf die Figuren 1 und 3 erklärt worden ist, gleich, daß zusätzlich eine Abstreifvorrichtung 4 vorgesehen ist, die die auf der Oberfläche 2b der Glieder 2 anfallenden Stoffe, wie zum Beispiel Späne, Kühlmittel oder dergleichen, wenn die Gliederschürze 1 als Schutzabdeckung einer Maschine verwendet wird, beseitigt. Diese Abstreifvorrichtung kann, wie es in Fig. 2 gezeigt ist, ein feststehender Abstreifer sein. Jedoch besteht auch die Möglichkeit, anstelle des feststehenden Abstreifers eine Bürste als die Abstreifvorrichtung zu verwenden.

Nachstehend erfolgt die Beschreibung eines dritten Ausführungsbeispiels der vorliegenden Erfindung.

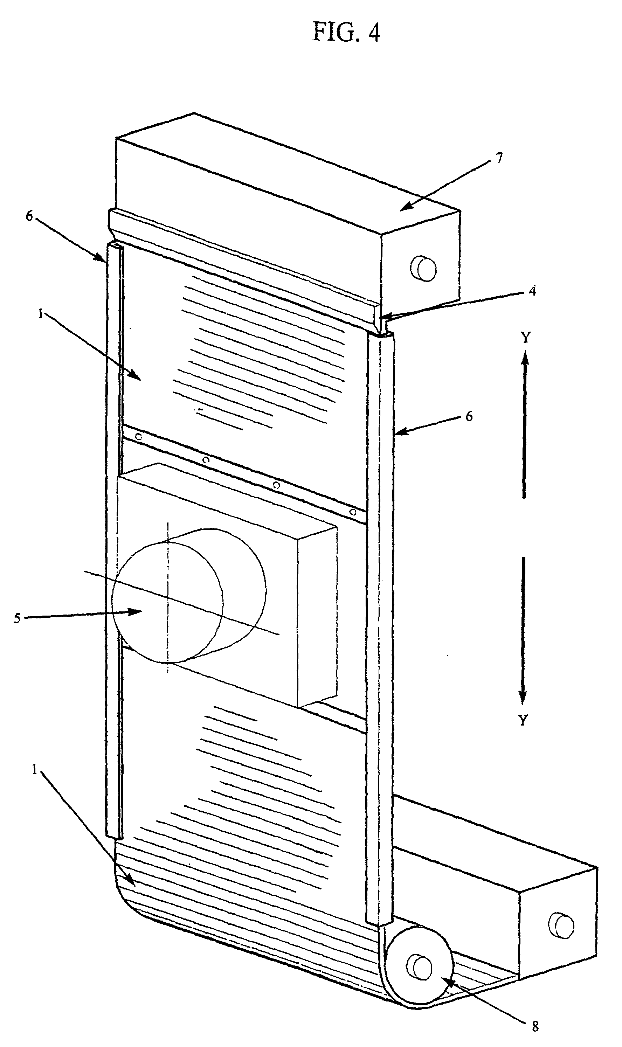

Der in Fig. 4 gezeigte Aufbau stellt das dritte Ausführungsbeispiel der vorliegenden Erfindung dar, bei dem Gliederschürzen 1 gemäß dem ersten oder zweiten Ausführungsbeispiel der vorliegenden Erfindung als eine Schutzabdeckung einer Maschine, wie zum Beispiel eine Spindelabdeckung, verwendet werden, wobei eine Spindel 5 in der Richtung der Pfeile Y in Fig. 4 bewegbar ist. Dies bedeutet, daß es sich bei dem in Fig. 4 gezeigten Ausführungsbeispiel um eine Anwendung handelt, bei der die Schutzabdeckung lediglich in eine Richtung verschiebbar ist. Die Spindel 5 befindet sich zwischen zwei Gliederschürzen 1, die mittels Führungen 6 geführt werden, die an beiden Seiten der Gliederschürzen 1 in der Bewegungsrichtung der Gliederschürzen 1 angebracht sind. Jede Gliederschürze 1 weist ein Ende auf, das fest an der Spindel 5 angebracht ist. Die obere Gliederschürze 1 weist weiterhin eine Aufwickelvorrichtung (nicht gezeigt) auf, die ähnlich zu derjenigen ist, die in Fig. 9 zum Stand der Technik gezeigt ist, und die in einer Abdeckung 7 untergebracht ist. Vorzugsweise, aber nicht zwingend, kann eine Abstreifvorrichtung 4 vorgesehen sein. In Fig. 4 ist diese Abstreifvorrichtung 4 an der Abdeckung 7 angebracht, sie kann jedoch auch vor der Abdeckung 7 vorgesehen sein. Diese Abstreifvorrichtung 4 verhindert unter anderem ein Eindringen der auf der Gliederschürze 1 angesammelten Stoffe, wie zum Beispiel Späne, in die Abdeckung 7. Die untere Gliederschürze 1 in Fig. 4 ist ausgenommen dessen gleich zu der oberen Gliederschürze 1 angeordnet, daß die untere Gliederschürze 1 mittels einer Umlenkvorrichtung 8 umgelenkt wird.

Wenn die Spindel 5 in die Richtung der Pfeile Y in Fig. 4 gemäß einer vorbestimmten durch eine Maschine durchgeführten Verarbeitung hin- und herbewegt wird, bleibt die zuvor beschriebene durch die zwei Gliederschürzen 1 gebildete Schutzabdeckung dadurch immer geschlossen, daß jeweils eine Ende jeder Gliederschürze 1 fest an der Spindel 5, wie zum Beispiel einem Fräskopf, einer Maschine, wie zum Beispiel einer Fräsmaschine, angebracht ist, und das andere Ende jeder Gliederschürze 1 in Übereinstimmung mit der Bewegung der Spindel 5 durch die Aufwickelvorrichtung (nicht gezeigt) aufgewickelt oder von dieser abgewickelt wird. Dadurch, daß bei der vorhergehend beschriebenen Schutzabdeckung die Gliederschürzen 1 gemäß dem ersten oder zweiten Ausführungsbeispiel verwendet werden, wird verhindert, daß auf der Gliederschürze 1 vorhandene Stoffe, wie zum Beispiel bei der Verarbeitung der Maschine anfallende Späne, in die Verbindungsbereiche zwischen Gliederverbindern 3 und Gliedern 2 (siehe Fig. 1) der Gliederschürze 1 gelangen. Weiterhin kann verhindert werden, daß, wenn der in Fig. 4 gezeigte Aufbau um 90° nach rechts gedreht ist, daß heißt, wenn die Gliederschürze 1 derart angeordnet ist, daß die einzelnen Glieder 2 (siehe Fig. 1) in der vertikalen Richtung angeordnet sind und die Bewegungsrichtung der Gliederschürze 1 horizontal verläuft, Stoffe, die auf der Gliederschürze 1 vorhanden sind, in die dann unten angeordnete Führung der Gliederschürze 1 fallen, da die Gliederschürze 1 vorzugsweise eine ebene Gesamtoberfläche aufweist, wenn die Gliederschürze den unter Bezugnahme auf Fig. 1 erwähnten gestreckten Zustand aufweist, da es folglich keine Spalte zwischen der Gliederschürze 1 und der Führung 6 gibt. Somit kann eine zuverlässige Bewegungsfähigkeit der Gliederschürze 1 sichergestellt werden kann, bei der ruckartige Bewegungen oder ein völliges Hemmen einer Bewegung aufgrund eines Verklemmens oder Verspießens von in die Führung 6 fallenden Spänen, usw. beseitigt sind.

Nachstehend erfolgt die Beschreibung eines vierten Ausführungsbeispiels der vorliegenden Erfindung.

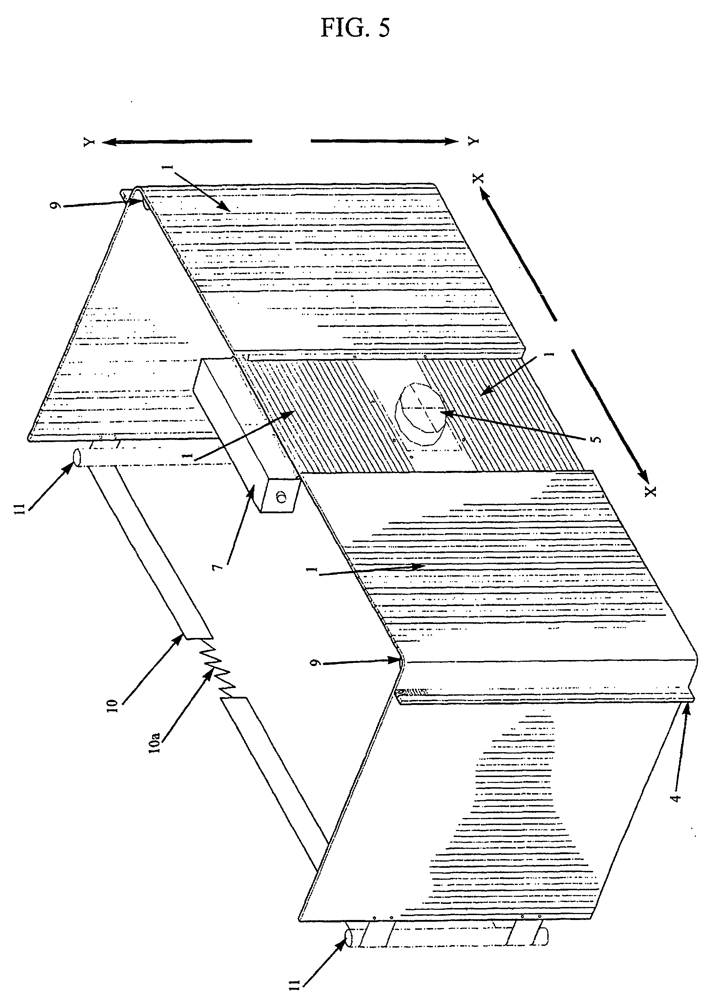

In Fig. 5 ist als viertes Ausführungsbeispiel der vorliegenden Erfindung die Anwendung der Gliederschürze 1 des ersten oder zweiten Ausführungsbeispiels der vorliegenden Erfindung an einer Spindelabdeckung einer Maschine gezeigt, deren Spindel in zwei Richtungen, daß heißt, die Richtungen der Pfeile X und Y in Fig. 5, bewegbar ist. Dabei entspricht der Aufbau der Schutzabdeckung in der Richtung der Pfeile Y weitestgehend dem in Fig. 4 gezeigten Aufbau und eine detaillierte Beschreibung von ihm wird deshalb weggelassen. In der Richtung der Pfeile X ist an jeder Seite einer Spindel 5 eine Gliederschürze 1 angeordnet. Zum Beseitigen unerwünschter auf der Gliederschürze 1 vorhandener Stoffe sind bei jeder Gliederschürze 1 Bürsten als eine Abstreifvorrichtung 4 vorgesehen. Ein Ende von jeder dieser beiden Gliederschürzen 1 ist fest mit jeweils einer Führung 6 an einer Seite der in Richtung der Pfeile Y bewegbaren Gliederschürzen 1 verbunden. Die Gliederschürzen 1 sind über je eine Umlenkrolle 9 um im wesentlichen 90° umgelenkt. Die anderen Enden jeder Gliederschürze 1 sind mit mindestens einem Zugband 10 verbunden, wobei in der Ausgestaltung in Fig. 5 zwei Zugbänder 10 vorhanden sind. Diese Zugbänder 10 sind über zwei Umlenkrollen 11 derart umgelenkt, daß sie parallel zu der Fläche verlaufen, in der die Spindel 5 angeordnet ist. In der Mitte der Zugbänder 10 ist ein flexibler Abschnitt 10a angeordnet, der eine Federwirkung aufweist.

Die Funktionsweise des vorhergehend genannten Aufbaus ist wie folgt. Wenn die Spindel 5 in die Richtung der Pfeile Y bewegt wird, bilden die in dieser Richtung bewegbaren Gliederschürzen 1 eine Abdeckung, wie es bereits unter Bezugnahme auf Fig. 4 beschrieben worden ist. Wenn die Spindel 5 andererseits in die Richtung der Pfeile X bewegt wird, wird der zuvor erwähnte Aufbau der Gliederschürzen 1 in der Richtung der Pfeile Y zusammen mit der Spindel 5 in die Richtung der Pfeile X bewegt, da die in die Richtung der Pfeile X bewegbaren Gliederschürzen 1 an dem einen Ende fest an den Führungen 6 der in die Richtung der Pfeile Y bewegbaren Gliederschürzen 1 angebracht sind. Über die Zugbänder 10, die an den anderen Enden der in die Richtung der Pfeile X bewegbaren Gliederschürzen 1 angebracht sind und die einen flexiblen Abschnitt 10a mit Federwirkung aufweisen, wird, wenn die Bewegung in die Richtung der Pfeile X zum Beispiel von links nach rechts in Fig. 5 stattfindet, die rechts der Spindel 5 angeordnete Gliederschürze 1 von links nach rechts bewegt, werden demgemäß die Zugbänder 10 von rechts nach links bewegt und wird demgemäß die links der Spindel 5 angeordnete Gliederschürze 1 von links nach rechts bewegt, so daß eine zuverlässige Spindelabdeckung sichergestellt ist, die als eine Schutzabdeckung einer Maschine geeignet ist, deren Spindel gleichzeitig in zwei unterschiedliche Richtungen bewegbar sein muß.

Gemäß diesem Ausführungsbeispiel werden ebenso die Vorteile erzielt, die bereits bezüglich den ersten bis dritten Ausführungsbeispielen beschrieben worden sind.

Insbesondere kann, wenn bei dem zuvor beschriebenen Aufbau für die in die Richtung der Pfeile X bewegbaren Gliederschürzen 1 diejenigen Gliederschürzen 1 verwendet werden, die eine glatte Gesamtoberfläche aufweisen, wenn sich die einzelnen Glieder in einem gestreckten Zustand entlang einer geraden Linie befinden, sichergestellt werden, daß auf der Gliederschürze 1 angesammelte Späne, usw. nicht in auf der unteren Seite in Fig. 5 angeordnete Führungen (nicht gezeigt) fallen, da sich aufgrund der glatten Gesamtoberfläche der Gliederschürzen 1 keine Spalte zwischen den Führungen und den Gliederschürzen 1 ergeben, wodurch verhindert wird, daß sich Späne, usw. in den Führungen verspießen und verklemmen und somit ruckartige Bewegungsabläufe oder ein vollständiges Hemmen der Bewegung der Gliederschürze 1 verursachen.

Somit weisen die gemäß den Ausführungsbeispielen der vorliegenden Erfindung beschriebenen Gliederschürzen wesentliche Vorteile gegenüber anderen Schutzabdeckungen von Maschinen im Stand der Technik auf, wie zum Beispiel eine erhöhte Zuverlässigkeit durch Vermeiden eines Eindringens von Spänen in einen Verbindungsbereich eines Glieds und eines Gliederverbinders oder eines Eindringens von Spänen in die Führung von Gliederschürzen, deren Glieder in vertikaler Richtung ausgerichtet sind und die in horizontaler Richtung bewegbar ist.

## Patentansprüche

1. Gliederschürze, insbesondere zur Abdeckung bewegbarer Werkzeugmaschinenteile, mit einer Vielzahl von gelenkig verbundenen Gliedern (2), die jeweils eine einen Abdeckungsflächenabschnitt bildende Großfläche (2b) und sich daran anschließende Seitenflächen aufweisen, wobei die Seitenflächen zweier benachbarter Glieder (2) in einer Streckstellung zumindest abschnittsweise aneinander anliegen,
***dadurch gekennzeichnet, daß***
von den Großflächen (2b) entfernte Abschnitte (2c) der Seitenfläche mit Umlenkradien versehen sind, entlang denen benachbarte Glieder (2) bei einer Relativverschwenkung aufeinander abrollbar sind.

2. Gliederschürze nach Anspruch 1, ***dadurch gekennzeichnet, daß*** die Seitenflächen mit an den Großflächen (2b) angrenzenden Abschnitten derart aneinander anliegen, daß die einzelnen Großflächen (2b) der Glieder (2) in der Streckstellung bündig sind.

3. Gliederschürze nach einem der vorhergehenden Ansprüche, ***dadurch gekennzeichnet, daß*** die einzelnen Großflächen (2b) der Glieder (2) in der Streckstellung eine glatte Gesamtoberfläche ergeben.

4. Gliederschürze nach einem der vorhergehenden Ansprüche, ***dadurch gekennzeichnet, daß*** sie weiterhin eine Abstreifvorrichtung (4) aufweist, die auf den Großflächen (2b) der Glieder (2) vorhandene Stoffe entfernt.

5. Gliederschürze nach Anspruch 4, ***dadurch gekennzeichnet, daß*** die Abstreifvorrichtung (4) ein feststehender Abstreifer ist.

6. Gliederschürze nach Anspruch 4, ***dadurch gekennzeichnet, daß*** die Abstreifvorrichtung (4) eine Bürste ist.

7. Gliederschürze nach einem der vorhergehenden Ansprüche, ***dadurch gekennzeichnet, daß*** sie weiterhin eine Aufwickelvorrichtung aufweist, auf die die Gliederschürze (1) mit mindestens einem vorbestimmten Radius aufwickelbar ist.

8. Gliederschürze nach Anspruch 7, ***dadurch gekennzeichnet, daß*** sie weiterhin eine Abdeckung (7) aufweist, in der die Aufwickelvorrichtung untergebracht ist.

9. Gliederschürze nach Anspruch 8, ***dadurch gekennzeichnet, daß*** die Abstreifvorrichtung (4) derart an der Abdeckung (7) angebracht ist, daß die auf der Gliederschürze (1) vorhandenen Stoffe vor Eintritt in die Abdeckung (7) abgestreift werden.

10. Gliederschürze nach Anspruch 8, ***dadurch gekennzeichnet, daß*** die Abstreifvorrichtung (4) derart von der Abdeckung (7) entfernt angebracht ist, daß die auf der Gliederschürze (1) vorhandenen Stoffe vor Eintritt in die Abdeckung (7) abgestreift werden.

11. Gliederschürze nach einem der vorhergehenden Ansprüche, ***dadurch gekennzeichnet, daß*** die Großfläche (2b) der einzelnen Glieder (2) eben ist und die in der Streckstellung unmittelbar aneinander angrenzenden Teile (2a) der Seitenflächen der Glieder (2) mit der Oberfläche (2b) der Glieder (2) einen rechten Winkel bilden.

12. Gliederschürze nach einem der vorhergehenden Ansprüche, ***dadurch gekennzeichnet, daß*** die einzelnen Glieder (2) einen innenliegenden Hohlraum (2d) aufweisen.

13. Gliederschürze nach einem der vorhergehenden Ansprüche, ***dadurch gekennzeichnet, daß*** die einzelnen Glieder (2) mittels Gliederverbindern (3) verbunden sind, von denen sich jeder zwischen jeweils zwei Gliedern (2) befindet.

14. Gliederschürze nach Anspruch 13, ***dadurch gekennzeichnet, daß*** einzelne Gliederverbinder (3) einen Mittenabschnitt mit zueinander parallelen Oberflächen und Unterflächen und zwei Endabschnitte einer im Querschnitt kreisförmigen Gestalt mit einem Durchmesser größer als die Dicke des Mittenabschnitts aufweisen.

15. Gliederschürze nach Anspruch 14, ***dadurch gekennzeichnet, daß*** einzelne Glieder (2) eine Aussparung (2e) aufweisen, die eine Gestalt aufweist, die einem Endabschnitt und einem Teil des Mittenabschnitts des Gliederverbinders (3) entspricht.

## Claims

1. A segmented apron, in particular for covering movable tool machine parts, including a multiplicity of articulatedly connected segments (2) each comprising a major surface (2b) forming a cover surface portion and lateral surfaces in continuation thereof, wherein the lateral surfaces of two neighboring segments (2) abut against each other at least in sections in an extended position,
***characterized in that***
sections (2c) of the lateral surface which are remote from the major surfaces (2b) are provided with deflection radii along which neighboring segments (2) may roll off on each other during a relative rotation.

2. The segmented apron in accordance with claim 1, ***characterized in that*** the lateral surfaces abut against each other in sections adjacent the major surfaces (2b) such that the single major surfaces (2b) of the segments (2) are flush in the extended position.

3. The segmented apron in accordance with any one of the preceding claims, ***characterized in that*** the single major surfaces (2b) of the segments (2) form a smooth overall surface in the extended position.

4. The segmented apron in accordance with any one of the preceding claims, ***characterized in that*** it further includes a stripping device (4) for removing matter present on the major surfaces (2b) of the segments (2).

5. The segmented apron in accordance with claim 4, ***characterized in that*** the stripping device (4) is a fixed stripper.

6. The segmented apron in accordance with claim 4, ***characterized in that*** the stripping device (4) is a brush.

7. The segmented apron in accordance with any one of the preceding claims, ***characterized in that*** it further includes a reeling device on which the segmented apron (1) may be reeled up with at least a predetermined radius.

8. The segmented apron in accordance with claim 7, ***characterized in that*** it further includes a cover (7) wherein the reeling device is accommodated.

9. The segmented apron in accordance with claim 8, ***characterized in that*** the stripping device (4) is mounted on the cover (7) in such a way that the matter present on the segmented apron (1) is stripped off before entering into the cover (7).

10. The segmented apron in accordance with claim 8, ***characterized in that*** the stripping device (4) is mounted at such a spacing from the cover (7) that the matter present on the segmented apron (1) is stripped off before entering into the cover (7).

11. The segmented apron in accordance with any one of the preceding claims, ***characterized in that*** the major surfaces (2b) of the single segments (2) are planar, and those portions (2a) of the lateral surfaces of the segments (2) closely adjacent in the extended position form right angles with the surfaces (2b) of the segments (2).

12. The segmented apron in accordance with any one of the preceding claims, ***characterized in that*** the single segments (2) have internal cavities (2d).

13. The segmented apron in accordance with any one of the preceding claims, ***characterized in that*** the single segments (2) are connected by means of segment connectors (3) each located between two respective segments (2).

14. The segmented apron in accordance with claim 13, ***characterized in that*** single segment connectors (3) include a center portion having parallel lower and upper surfaces and two end portions having a circular cross-sectional conformation with a diameter that is greater than the thickness of the center portion.

15. The segmented apron in accordance with claim 14, ***characterized in that*** single segments (2) include recesses (2e) having a conformation which corresponds to one end portion and a part of the center portion of the segment connector (3).

## Revendications

1. Rideau articulé servant notamment à couvrir des parties mobiles de machine-outil et ayant une pluralité d'éléments (2) assemblés de manière articulée qui comportent à chaque fois une grande face (2b) formant une partie de surface de recouvrement et des faces latérales s'y raccordant, les faces latérales de deux éléments voisins (2) s'appliquant au moins partiellement l'une contre l'autre lorsqu'elles sont dans une position linéaire,
**caractérisé en ce que**
les sections (2c) de face latérale éloignées des grandes faces (2b) comportent des arrondis de déviation le long desquels des éléments voisins (2) peuvent rouler l'un sur l'autre en basculant l'un par rapport à l'autre.

2. Rideau articulé selon la revendication 1, **caractérisé en ce que** les faces latérales s'appliquent l'une contre l'autre par leurs sections avoisinant les grandes faces (2b) de telle manière que les différentes grandes faces (2b) des éléments (2) sont jointives lorsqu'elles sont en position linéaire.

3. Rideau articulé selon l'une des revendications précédentes, **caractérisé en ce que**, dans une position linéaire, les différentes grandes faces (2b) des éléments (2) forment une surface globale lisse.

4. Rideau articulé selon l'une des revendications précédentes, **caractérisé en ce que** ledit rideau articulé comporte, en outre, un dispositif de raclage (4) qui enlève les matières se trouvant sur les grandes faces (2b) des éléments (2).

5. Rideau articulé selon la revendication 4, **caractérisé en ce que** le dispositif de raclage (4) est un racloir fixe.

6. Rideau articulé selon la revendication 4, **caractérisé en ce que** le dispositif de raclage (4) est une brosse.

7. Rideau articulé selon l'une des revendications précédentes, **caractérisé en ce que** ledit rideau articulé comporte, en outre, un enrouloir sur lequel le rideau articulé (1) peut être enroulé au moins selon un rayon de courbure prédéterminé.

8. Rideau articulé selon la revendication 7, **caractérisé en ce que** ledit rouleau articulé comporte, en outre, un boîtier (7) dans lequel l'enrouloir est installé.

9. Rideau articulé selon la revendication 8, **caractérisé en ce que** le dispositif de raclage (4) est placé sur le boîtier (7) de telle sorte que les matières se trouvant sur le rideau articulé (1) sont enlevées avant l'entrée dans le boîtier (7).

10. Rideau articulé selon la revendication 8, **caractérisé en ce que** le dispositif de raclage (4) est placé à distance du boîtier (7) de telle manière que les matières se trouvant sur le rideau articulé (1) sont enlevées avant l'entrée dans le boîtier (7).

11. Rideau articulé selon l'une des revendications précédentes, **caractérisé en ce que** la grande face (2b) des différents éléments (2) est plane et **en ce que** les parties (2a) des faces latérales des éléments (2) qui, en position linéaire, s'appliquent directement les unes contre les autres forment un angle droit avec la face supérieure (2b) des éléments (2).

12. Rideau articulé selon l'une des revendications précédentes, **caractérisé en ce que** les différents éléments (2) comportent une cavité intérieure (2d).

13. Rideau articulé selon l'une des revendications précédentes, **caractérisé en ce que** les différents éléments (2) sont assemblés au moyen de raccords d'élément (3) dont chacun se trouve entre deux éléments (2).

14. Rideau articulé selon la revendication 13, **caractérisé en ce que** les différents raccords d'élément (3) comportent une section centrale ayant des faces supérieure et inférieure parallèles ainsi que deux extrémités ayant, en coupe transversale, une forme circulaire d'un diamètre supérieur à l'épaisseur de la section centrale.

15. Rideau articulé selon la revendication 14, **caractérisé en ce que** les différents éléments (2) comportent un évidement (2e) ayant une forme qui correspond à une extrémité du raccord d'élément (3) et à une partie de la section centrale de ce dernier.
